# EUROPEAN PATENT SPECIFICATION

(11) **EP 3 677 832 B1**
(45) Date of publication and mention of the grant of the patent: **30.08.2023**
(21) Application number: 18851710.6
(22) Date of filing: 26.07.2018
(51) Int. Cl.: F23D 14/84, F23D 14/58, C21B 11/00, F23L 7/00, F23D 14/56, F23D 14/22, C21C 5/46, C21C 5/52, F27D 99/00

(54) **OXYGEN-ENRICHED BURNER AND HEATING METHOD USING OXYGEN-ENRICHED BURNER**
SAUERSTOFFANGEREICHERTER BRENNER UND HEIZVERFAHREN MIT DEM SAUERSTOFFANGEREICHERTEN BRENNER
BRÛLEUR ENRICHI EN OXYGÈNE ET PROCÉDÉ DE CHAUFFAGE UTILISANT UN BRÛLEUR ENRICHI EN OXYGÈNE

(30) Priority: 30.08.2017 JP 2017165631
(43) Date of publication of application: 08.07.2020
(73) Proprietor: Taiyo Nippon Sanso Corporation, Tokyo 142-8558 (JP)
(72) Inventor: SAITO, Takeshi, Tokyo 142-8558 (JP); YAMAMOTO, Yasuyuki, Tokyo 142-8558 (JP); YAMAGUCHI, Masashi, Tokyo 142-8558 (JP); HAGIHARA, Yoshiyuki, Tokyo 142-8558 (JP); SEINO, Naoki, Tokyo 142-8558 (JP)
(74) Representative: HGF
(86) International application number: PCT/JP2018/028072
(87) International publication number: WO 2019/044296

(56) References cited:
- EP-A1- 3 677 833
- WO-A1-2018/051576
- JP-A- 2005 113 200
- JP-A- 2012 083 045
- JP-A- 2013 079 753
- JP-A- 2013 079 753

## Description

### Field of the Invention

The present invention relates to an oxygen-enriched burner and a method for heating using an oxygen-enriched burner.

### Description of Related Art

A ladle and a tundish, which are furnaces (containers) that receive pig iron (molten metal) used in iron producing process, are preheated using a flame formed by a burner to prevent damage to refractories (refractory bricks, and the like) in the furnace due to rapid heating. The flame of the burner used for such applications is required to have high heat transfer efficiency and to be able to heat uniformly an object to be heated.

As a method for increasing a heat transfer efficiency of the burner, for example, a method for increasing the flame temperature by using an oxygen-enriched air as an oxidizing agent has been adopted. However, in a conventional burner, since the flame has a linear shape, there is a tendency to locally heat one point of the object to be heated, and uniform heating is difficult.

On the other hand, Patent Documents 1 and 2 disclose a method capable of performing uniform heating while moving a flame by using a self-induced oscillating phenomenon of a jet flow and maintaining high heat transfer efficiency. The burners disclosed in Patent Documents 1 and 2 employ a nozzle structure that applies the self-induced oscillating phenomenon in which a jet flow periodically changes without requiring an external driving force. Thereby, since a flame direction can be changed periodically, it becomes possible to perform uniform heating, maintaining high heat transfer efficiency. As a result, the burners disclosed in Patent Documents 1 and 2 can uniformly heat over a wide range as compared with conventional radiant tube burners and the like, and for example, the burners are suitably used for preheating such as the tundish.

Patent Document 2, on which the two-part-form of claim 1 is based, JP 2013079753A, describes a burner which supplies an oxidant stream and a fuel stream for combustion. The oxidant stream includes a primary oxidant stream and a secondary oxidant stream. At least one of fluid jet passages for forming the fuel streams, the primary oxidant stream, and the secondary oxidant stream, is formed to be expanded toward an outlet of the stream.

Patent Document 3, WO 2018051576A1, describes a burner that ejects a fluid for primary combustion from a central widening ejection port that widens toward a distal end while causing the fluid to self-oscillate, and ejects a fluid for secondary combustion from a pair of side ejection ports that are provided to the two sides of the central widening ejection port.

### Prior Art Documents

### Patent Literature

Patent Document 1: Japanese Unexamined Patent Application, First Publication No. 2005-113200
Patent Document 2: Japanese Unexamined Patent Application, First Publication No. 2013-079753
Patent Document 3: WO 2018051576A1

### Disclosure of the Invention

### Problem to be Solved by the Invention

The characteristics of the burners performing the self-induced oscillation disclosed in Patent Documents 1 and 2 can be controlled by the oscillation period of the jet flow. When an ejection velocity of a center fluid ejected from a center fluid ejection outlet of the burner is the same, and the oscillation period is short, fluid mixing is promoted, convection heat transfer is enhanced, and uniform heat transfer distribution can be obtained. On the other hand, when the oscillation period is long, the combustion is slow, and the radiant heat transfer is enhanced, and a long flame can be obtained. In order to control the oscillation period while keeping the ejection velocity constant, the flow of the fluid in a connection pipe provided for generating the self-induced oscillation may be controlled. An arbitrary oscillation period can be obtained by appropriately selecting the length of the connection pipe.

However, in the burners disclosed in Patent Documents 1 and 2, since the oscillation period in the flow rate of the center fluid is fixed, the combustion characteristic cannot be changed. For example, a method of making the connection pipe removable is also conceivable. However, for example, when the oscillation period is controlled using a flexible cable as the connection pipe, it is necessary to increase the cable length in order to increase the oscillation period, which causes a problem that the apparatus becomes complicated. In addition, when the frequency is changed while the burner is operated, the connection pipe needs to be exchanged in the combustion state, which may cause danger in handling the connection pipe in which the fluid has flowed into the inside.

The present invention has been made in view of the above problems, and an object of the present invention is to provide an oxygen-enriched burner which can change any oscillation period with a simple operation and uniformly heat an object to be heated with an excellent heat transfer efficiency when heating the object to be heated while moving the flame with the self-induced oscillation, and a method for heating using an oxygen enriched burner.

### Means to Solve the Problem

In order to solve the problems, the present invention provides the oxygen-enriched burner according to claim 1 and the method for heating using an oxygen-enriched burner according to claim 4.

### Effects of the Invention

As explained above, the oxygen-enriched burner according to the present invention is an oxygen-enriched burner which moves a flame by the self-induced oscillation, wherein the communication portion which communicates a pair of the openings provided on the side walls of the fluid ejection flow path of the center fluid ejection outlet includes the communication element which communicates the first communication pipe and the second communication pipe. Thereby, the oxygen-enriched burner according to the present invention can change and control to any oscillation period with a simple operation. Therefore, during the operation of the oxygen-enriched burner, it is possible to change the combustion characteristics with a simple switching operation and to heat the object to be heated uniformly with excellent heat transfer efficiency. Furthermore, by ejecting the oxygen-enriched air from the peripheral fluid ejection outlet toward the fuel gas ejected from the center fluid ejection outlet, the combustion efficiency is improved, and the amount of NOₓ emissions can be effectively suppressed.

A heating method using an oxygen-enriched burner according to the present invention is a heating method using the oxygen-enriched burner according to the present invention. For this reason, as described above, the oscillation period of the flame due to the self-induced oscillation can be changed by a simple operation as necessary, and the object to be heated can be uniformly heated with excellent heat transfer efficiency.

### Brief description of drawings

FIG. 1 is a diagram schematically showing an oxygen-enriched burner according to an embodiment of the present invention, and is a plan view showing an example of a positional relationship between a center fluid ejection outlet and a peripheral fluid ejection outlet.
FIG. 2 is a diagram schematically showing an oxygen-enriched burner according to an embodiment of the present invention, and is a cross-sectional view of the burner taken along line A-A shown in FIG. 1.
FIG. 3 is a diagram schematically showing an oxygen-enriched burner according to an embodiment of the present invention, and FIGS. 3A and 3B are conceptual diagrams showing a oscillation state of an ejection direction of a center fluid in the burner shown in FIGS. 1 and 2.
FIG. 4 is a diagram schematically showing an oxygen-enriched burner and a method for heating using an oxygen-enriched burner in Examples, and FIGS. 4A and 4B are schematic diagrams showing an example of a positional relationship between a burner and a thermocouple.
FIG. 5 is a diagram schematically showing an oxygen-enriched burner and a heating method using an oxygen-enriched burner in Examples 1 and 2, and is a graph showing a temperature distribution in a furnace with respect to a distance from a burner axis.
FIG. 6 is a diagram schematically showing an oxygen-enriched burner and a method for heating an oxygen-enriched burner in Examples, and FIGS. 6A and 6B are schematic diagrams showing an example of a positional relationship between a burner and a heatsink member.
FIG. 7 is a diagram schematically showing an oxygen-enriched burner and a method for heating an oxygen-enriched burner in Example 3 and 4, and FIGS. 6A and 6B are schematic diagrams showing an example of a positional relationship between a distance from a tip surface of a burner and an amount of heat transferred.
FIG. 8 is a diagram schematically showing an oxygen-enriched burner and a method for heating an oxygen-enriched burner in Example 5, and is a graph showing a relationship between a self-induced oscillation period and an amount of NOₓ emission.

### Detailed Description of the Invention

Hereinafter, an oxygen-enriched burner and a method for heating using an oxygen-enriched burner which is an embodiment according to the present invention will be described with reference to figures as appropriate.

In the drawings used in the following description, in order to make the features easy to understand, the features may be enlarged for the sake of convenience, and the dimensional ratio of each component may be limited to the same as the actual one. In addition, the materials and the like exemplified in the following description are merely examples, and the present invention is not necessarily limited to them, and can be appropriately changed and implemented without changing the gist of the invention.

### <Burner>

Hereinafter, the structure and a method for combusting of an oxygen-enriched burner according to the present invention will be described in detail.

### [Structure of Burner]

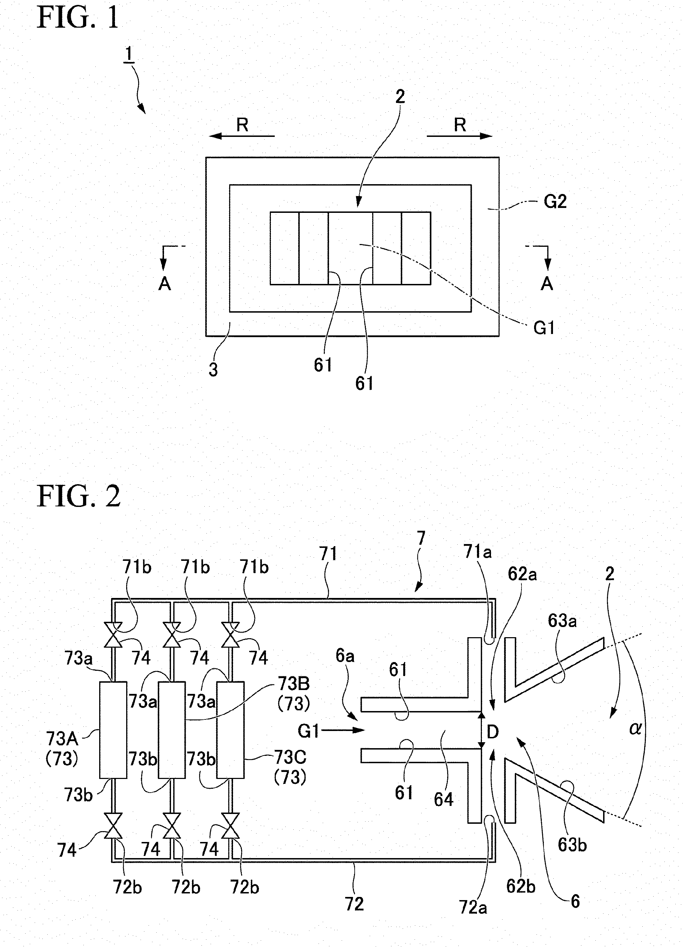

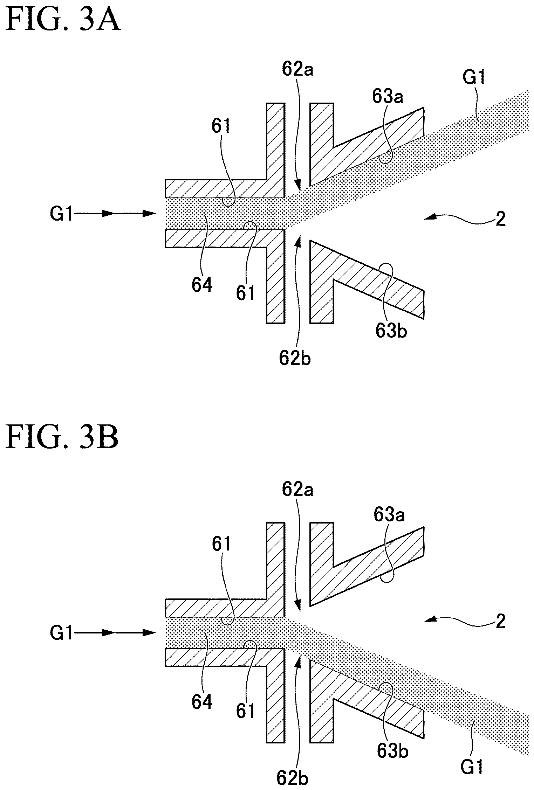

FIGS. 1 to 3 are diagrams for explaining a structure of an oxygen-enriched burner 1 (hereinafter sometimes abbreviated as burner 1) according to an embodiment of the present invention. FIG. 1 is a plan view showing an example of a positional relationship between a center fluid ejection outlet and a peripheral fluid ejection outlet. FIG. 2 is a sectional view (cross-sectional view) taken along line A-A shown in FIG. 1. FIG. 3 is a conceptual diagram showing oscillation states of an ejection direction of a fluid in the burner 1 according to one embodiment of the present invention. Moreover, FIGS. 1 to 3 are schematic diagrams showing an arrangement relationship and a size of each fluid ejection outlet and opening, and the like, and some of the detailed parts such as a tube wall as a nozzle are omitted.

As shown in FIGS. 1 to 3, the burner 1 according to the present embodiment ejects at least one of a fuel gas G1 and an oxygen-enriched air G2 from a plurality of fluid ejection outlets provided at the tip surface of the burner 1, and burns them.

Specifically, the burner 1 of the present embodiment includes a plurality of fluid ejection outlets including a center fluid ejection outlet 2, and a peripheral fluid ejection outlet 3.

A pair of opening 62a and 62b are provided at opposing positions on side walls 61 which form a fluid ejection flow path 6 that forms the center fluid ejection outlet 2. A pair of the openings 62a and 62b are communicated with each other by a communication portion 7.

Further, a distance between a pair of the side walls 63a and 63b forming the fluid ejection flow path 6 on the downstream side of the opening 62a and 62b is gradually expanded toward the downstream side. That is, when the burner 1 is viewed from above, the fluid ejection flow path 6 on the downstream side of the opening 62a, 62b has a fan shape. Moreover, the peripheral fluid ejection outlet 3 is arranged around the center fluid ejection outlet 2.

In the burner 1 of the present embodiment, the fuel gas G1 or the oxygen-enriched air G2 is ejected from the center fluid ejection outlet 2 and the peripheral fluid ejection outlet 3, respectively, but any gas may be ejected from which ejection port.

In the burner 1 of the present embodiment, the fuel gas G1 is ejected from the center fluid ejection outlet 2, and the oxygen-enriched air G2 is ejected from the peripheral fluid ejection outlet 3.

The center fluid ejection outlet 2 is an opening (nozzle) that ejects the fuel gas G1 when the fuel gas G1 is supplied to the fluid ejection flow path 6. As will be described later, since the cross section of the fluid ejection flow path 6 in the direction orthogonal to the flow direction of the fluid is substantially rectangular, the shape of the center fluid ejection outlet 2 is rectangular.

A center fluid supply line (not shown) is connected to an inlet 6a of the fluid ejection flow path 6. Thereby, the fuel gas G1 can be introduced into the fluid ejection flow path 6, and the fuel gas G1 is ejected from the center fluid ejection outlet 2.

As described above, the cross section of the fluid ejection flow path 6 in the direction orthogonal to the flow direction of the fluid (gas) is substantially rectangular. Side surfaces of the substantial rectangular are formed by a pair of the side walls 61 and 61 described above. The side walls 61 and 61 are provided with a pair of the openings 62a and 62b so as to face each other. Further, as shown in FIG. 2, a pair of the openings 62a and 62b are communicated by a communication portion 7.

As described above, the side surfaces of the fluid ejection flow path 6 located downstream of the opening 62a and 62b are formed by a pair of the side walls 63a and 63b. An interval of a pair of the side walls 63a, 63b is gradually expanded toward the downstream. The cross section of the fluid ejection flow path 6 along the flow direction of the fluid (gas) located downstream of the openings 62a and 62b has a fan shape. That is, the side surfaces of the fluid ejection flow path 6 positioned downstream of the openings 62a and 62b are formed by a pair of the side walls 63a and 63b arranged in a substantially V shape.

On the other hand, the fluid ejection flow path 6 positioned on the upstream side of a pair of the openings 62a and 62b is formed as a rectangular tube-shaped flow path 64 in which the opposed side walls 61 and 61 extend substantially in parallel. The shape of the cross section along the flow direction of the fluid (gas) is substantially rectangular.

The burner 1 of the present embodiment has a pair of the openings 62a and 62b arranged opposite to each other on a pair of the side walls 61 and 61 forming a fluid ejection flow path 6, and a pair of the openings 62 a and 62b are communicated with each other through the communication portion 7. Thereby, the so-called flip-flop nozzle self-induced oscillation can be generated in the fuel gas G1 ejected from the center fluid ejection outlet 2.

That is, as shown in FIGS. 3A and 3B, when the fluid (fuel gas G1) flowing through the flow path 64 of the fluid ejection flow path 6 passes between a pair of the openings 62a and 62b and flows between a pair of the side walls 63a and 63b arranged in a fan-shaped cross section, the fluid is ejected from the center fluid ejection outlet 2 while self-induced oscillation so as to alternately contact one side wall 63a and the other side wall 63b. In FIG. 1, an arrow R in FIG. 1 means a self-induced oscillating direction of the fluid.

The amplitude and frequency of the fluid due to the self-induced oscillation vary according to various conditions such as the dimensions of the opening 62a and 62b, a air of the side walls 63a and 63b, and the communication portion 7, and the flow velocity of the fluid.

In the oxygen-enriched burner 1 according to the present embodiment, the fluid ejected from the center fluid ejection outlet 2 is oscillated at a desired angle and frequency within certain ranges by setting the dimensions and the number of installed communication elements 73 in the communication portion 7. That is, according to the oxygen-enriched burner of the present embodiment, the fluid ejected from the center fluid ejection outlet 2 can be oscillated at a desired angle and frequency within certain ranges with a simple configuration and a simple operation.

Hereinafter, the communication portion 7 which is one of the characteristic parts of the oxygen-enriched burner 1 of the present embodiment will be described.

The communication portion 7 includes a first communication pipe 71 and a second communication pipe 72 each having a first end 71a, 72a connected to a pair of the openings 62a, 62b, and a plurality of tubular communication element 73 connected to a second end 71b, 72b of the first communication pipe 71 and the second communication pipe 72 and communicating the first communication pipe 71 and the second communication pipe 72.

That is, the communication portion 7 includes the first communication pipe 71, the second communication pipe 72, and a plurality of the communication elements 73. The first end 71a of the first communication pipe 71 is connected to the opening 62a and the second other end 71b is connected to the communication element 73. The first end 72a of the second communication pipe 72 is connected to the opening 62b, and the second end 72b is connected to the communication element 73.

In FIG. 2, the communication portion 7 includes the first communication pipe 71, the second communication pipe 72, and three communication elements 73 connected in parallel between the first communication pipe 71 and the second communication pipe 72. That is, as shown in FIG. 2, the first communication pipe 71 has three second ends 71b, 71b, 71b. Similarly, the second communication pipe 72 also has three second ends 72b, 72b, 72b. The second ends 71b, 71b, 71b of the first communication pipe 71 communicate with the second ends 72b, 72b, 72b of the second communication pipe 72 through three communication elements 73 (73A, 73B, 73C). That is, the three communication elements 73 (73A, 73B, 73C) are arranged in parallel to the first communication pipe 71 and the second communication pipe 72.

In the oxygen-enriched burner 1 of the present embodiment, self-induced oscillation is generated by a flip-flop nozzle by communicating a pair of the openings 62a and 62b with the communication portion 7.

The communication portion 7 in the oxygen-enriched burner 1 of the present embodiment further includes an on-off valve 74 provided between the first communication pipe 71 and the communication element 73, and an on-off valve 74 provided between the second communication pipe 72 and the communication element 73. That is, the on-off valve 74 is connected to each of one ends 73a, 73a, 73a and the other ends 73b, 73b, 73b of communication elements 73A, 73B, and 73C.

Since the burner 1 of the present embodiment includes the on-off valve 74, it is possible to select only any communication element among the communication elements 73A, 73B, and 73C. Of course, by operating the on-off valve 74, all the communication elements 73A, 73B, 73C can be used simultaneously or all can be stopped.

In the burner 1 of the present embodiment, the flow rate and flow velocity of the fluid flowing through each communication element can be set to different values by changing the inner diameters and lengths (full lengths) of a plurality of the communication elements 73A, 73B, and 73C. That is, by operating the on-off valve 74 and selecting an arbitrary communication element, the flow rate and flow velocity of the fluid in the communication portion 7 can be adjusted, and the self-induced oscillation period can be set to an arbitrary period. The longer the communication element 73 is, the longer the self-induced oscillation period of the fluid ejected from the center fluid ejection outlet 2 is. The smaller the inner diameter of the communication element 73, the longer the self-induced oscillation period.

The flow rate and flow velocity of the fluid in the communication element 73 can also be changed by providing a baffle plate or the like in the communication element 73.

The relationship between a length len of the communication element, which is made dimensionless by the diameter or the equivalent diameter (when the channel cross section is not circular) D of the fluid ejection flow path 6 and a cross section S of the communication element 73, and a oscillation frequency (Strouhal number) St, which is made dimensionless by the diameter or the equivalent diameter D and the ejection velocity U of the center fluid, is expressed by the expression
{len = k · 1 / St (k: proportional constant)}, and is linear.

That is, the relationship between the length len of the communication element and the frequency St is also expressed by the expression {1 / St = D / (t · U) (t: oscillation period)}. However, the diameter or the equivalent diameter D of the fluid ejection flow path 6 and the ejection velocity U of the center fluid are determined. For this reason, it is possible to change the oscillation period t by using communication elements 73 having different communication element lengths len.

As shown in FIG. 2, when the cross section of the fluid ejection flow path 6 in the direction orthogonal to the flow direction of the fluid is rectangular, the interval between the side walls 61 and 61 located on the upstream side with respect to a pair of the openings 62a and 62b can be the equivalent diameter D.

The oxygen-enriched burner 1 of the present embodiment includes the communication elements 73A, 73B, and 73C having different specifications, and the oscillation period t can be easily changed by arbitrarily selecting them.

In the oxygen-enriched burner 1 of the present embodiment, the first communication pipe 71 and the communication element 73 may be detachably connected, or the second communication pipe 72 and the communication element 73 may be detachably connected. The communication element 73 may be detachably connected to the on-off valve 74. By detachably attaching the communication element 73 to the first communication pipe 71 and the second communication pipe 72 (or the on-off valve 74), it is possible to easily replace the communicating element 73 with a communicating element which can obtain a flow rate and a flow velocity of the fluid according to the characteristics of an object to be heated.

Various methods can be employed to make the communication element 73 attachable to and detachable from the first communication pipe 71 and the second communication pipe 72 (or the on-off valve 74). For example, both ends of the communication element 73 and the first communication pipe 71 and the second communication pipe 72 may be sealed with an O-ring. A screwing structure may be provided at both ends of the communication element 73 and the first communication pipe 71 and the second communication pipe 72.

The opening angle of a pair of the side walls 63 in the fluid ejection flow path 6, that is, the opening angle α (see FIG. 2) of the center fluid ejection outlet 2 is not particularly limited, and may be set in consideration of a desired opening angle of the flame. However, from the viewpoint of stably generating oscillation in the ejection direction of the fluid and realizing uniform heating, the angle is preferably 90° or less.

In FIG. 2, the communication portion includes three communication elements 73a, 73b, and 73c, but is not limited thereto. For example, the number of the communication elements 73 may be two, or four or more communication elements 73 may be provided.

Moreover, in the burner 1 of the present embodiment, the ejection amount of the center fluid (the fuel gas G1) ejected from the center fluid ejection outlet 2 and the ejection amount of the peripheral fluid (the oxygen-enriched air G1) ejected from the peripheral fluid ejection outlet 3 are preferably individually controllable. For example, a flow rate control device may be provided in the line that is connected to each ejection outlet and supplies each fluid.

As shown in FIG. 1, the peripheral fluid ejection outlet 3 is arranged around the center fluid ejection outlet 2 so as to surround the center fluid ejection outlet 2.

A peripheral fluid supply line (not shown) is connected to the peripheral fluid ejection outlet 3. With the introduction of the oxygen-enriched air G2, the peripheral fluid ejection outlet 3 becomes opening (nozzle) to eject gas.

Here, "the peripheral fluid ejection outlet 3 is arranged around the center fluid ejection outlet 2" in the present embodiment means that the peripheral fluid ejection outlet 3 is arranged so as to surround the center fluid ejection outlet 2, and that the center fluid ejection outlet 2 and the peripheral fluid ejection outlet 3 are arranged at adjacent positions.

By arranging the peripheral fluid ejection outlet 3 around the center fluid ejection outlet 2, the oxygen-enriched air G2 can be ejected from a position adjacent to the position at which the fuel gas G1 is ejected.

In the oxygen-enriched burner of present embodiment, the peripheral fluid ejection outlet 3 is arranged so as to surround the center fluid ejection outlet 2, so that the center fluid ejected from the center fluid ejection outlet 2 (the fuel gas G1) and the peripheral fluid (the oxygen-enriched air G2) ejected from the peripheral fluid ejection outlet 3 are effectively mixed. In addition, since the fluid is ejected from the peripheral fluid ejection outlet 3 to the outer periphery of the flame, the reduction region is spread, and the effect of improving the combustion efficiency when forming the flame is obtained.

The shape of the peripheral fluid ejection outlet 3 may be a rectangular shape or a circular shape arranged so as to surround the center fluid ejection outlet 2. Further, the peripheral fluid ejection outlet 3 may be configured to surround the center fluid ejection outlet 2 with a plurality of openings (holes).

### [Method for Combusting Burner]

Next, a method for combusting using the oxygen-enriched burner 1 of the present embodiment will be described.

In the burner 1 of the present embodiment, the center fluid ejected from the center fluid ejection outlet 2 is the fuel gas G1, the peripheral fluid ejected from the peripheral fluid ejection outlet 3 is the oxygen-enriched air G2, and a flame is formed in an ejection direction of the fuel gas G1.

Examples of the fuel gas G1 include natural gas (LNG), but liquid fuel such as heavy oil may be used.

Further, as the oxygen-enriched air G2, for example, a mixed gas of oxygen and air in which the oxygen concentration is increased as much as possible can be exemplified. Instead of the air, for example, nitrogen gas, carbon dioxide gas, exhaust gas, or the like can be used and mixed with oxygen. Moreover, as oxygen used for the mixed gas, industrial pure oxygen may be used.

When combusting the burner 1 of the present embodiment, the fuel gas G1 is ejected from the center fluid ejection outlet 2 while alternately and periodically changing the ejection direction by the self-induced oscillation (see FIGS. 3A and 3B). At this time, the oxygen-enriched air G2 (peripheral fluid) is ejected toward the fuel gas G2 ejected from the center fluid ejection outlet 2 at a periodically changing angle from the peripheral fluid ejection outlet 3 so as to wrap the fuel gas G1 and contributes to the formation of the flame.

As the oxygen-enriched air G2 is ejected toward the fuel gas G1, the combustion efficiency is improved, and the amount of NOₓ emission can be effectively suppressed. Moreover, the heat transfer efficiency by the flame improves and it becomes possible to heat the object to be heated uniformly.

Moreover, the switching period (oscillation period t) of the ejection direction of the fuel gas G1 by the self-induced oscillation is not particularly limited. What is necessary is just to set the switching period suitably in a range which can be heated uniformly with the excellent heat-transfer efficiency also in the position away from the center axis of the burner. As described later, the oscillation period t for obtaining such an effect is preferably set to oscillation period t = 30 seconds or less.

The oxygen-enriched burner 1 of the present embodiment is a burner that oscillates the flame by the self-induced oscillation, and includes the communication portion 7. Therefore, the oscillation period t of the fluid ejected from the center fluid ejection outlet 2 can be changed and controlled. As a result, when the oxygen-enriched burner 1 is operated, the combustion characteristic can be changed by a simple switching operation, and the object to be heated can be uniformly heated with excellent heat transfer efficiency.

### <Method for Heating Using Oxygen-Enriched Burner>

The method for heating according to the present invention is a method for heating an object to be heated, such as a tundish while the oxygen-enriched burner 1 is used to cause the self-induced oscillation of the fluid ejected from the center fluid ejection outlet 2 in the expanding direction of the fluid ejection flow path 6.

Since the method for heating of the present invention is a method for heating an object to be heated using the oxygen-enriched burner 1 described above, when heating the object to be heated by the flame that oscillates with the self-induced oscillation, the object to be heated can be uniformly heated with excellent heat transfer efficiency while changing the oscillation period t of the self-induced oscillation of the fluid ejected from the center fluid ejection outlet 2.

The object to be heated in the method for heating of the present invention is not particularly limited. As one embodiment, a ladle and a tundish (not shown), or the like that receives pig iron used in the steel making process described above can be given.

The method for heating of the present embodiment is a method for heating an object to be heated such as a ladle or a tundish using the burner 1, wherein the oscillation period t of the fluid ejected from the center fluid ejection outlet 2 can be changed and controlled. Thereby, when the burner 1 is operated, the combustion characteristic can be changed by a simple switching operation, and the object to be heated can be uniformly heated with excellent heat transfer efficiency.

In the method for heating of the present embodiment, the period of the self-induced oscillation (oscillation period t) of the fluid ejected from the center fluid ejection outlet 2 is not particularly limited and can be set as appropriate in consideration of the characteristics of the object to be heated. Since various objects to be heated can be uniformly heated over a wide area, the oscillation period t = 30 seconds or less is preferable.

Note that the object to be heated by the method for heating using the burner 1 of the present embodiment is not limited to a ladle or a tundish used in the steel making process. For example, in the case of heating various objects to be heated that require high temperature and uniform heating, the present invention can be applied without any limitation.

### <Effects>

As explained above, the oxygen-enriched burner of the present embodiment includes the center fluid ejection outlet 2 and the peripheral fluid ejection outlet 3 provided around the center fluid ejection outlet 2, a pair of the openings 62a, 62b are provided at opposite positions on the side walls 61, 61 of the fluid ejection flow path 6 of the center fluid ejection outlet 2, a pair of the openings 62a, 62b are communicated with each other by the communication portion 7, the first communication pipe 71 and the second communication pipe 72 each having the first end 71a, 72a connected to a pair of the openings 62a, 62b, and a plurality of communication elements 73 connected to the second ends 71b, 72b of the first communication pipe 71 and the second communication pipe 72 and communicating the first communication pipe 71 and the second communication pipe 72.

Thus, in the oxygen-enriched burner 1 that oscillates the flame by the self-induced oscillation, the communication portion 7 that communicates a pair of the openings 62a and 62b includes the communication element 73 that communicates the first communication pipe 71 and the second communication pipe 72. Thereby, it can change and control to arbitrary oscillation periods with a simple structure and a simple operation. Therefore, when the oxygen-enriched burner 1 is operated, the combustion characteristics can be changed by a simple switching operation, and the object to be heated can be uniformly heated with excellent heat transfer efficiency.

Furthermore, since the center fluid ejection outlet 2 and the peripheral fluid ejection outlet 3 are provided, the oxygen-enriched air G2 can be ejected toward the fuel gas G1. As a result, the combustion efficiency can be improved, and the amount of NOx emission can be effectively suppressed.

Moreover, the method for heating using an oxygen-enriched burner of the present embodiment is a method for heating using the oxygen-enriched burner 1 described above. For this reason, similar to the oxygen-enriched burner 1, the oscillation period t of the flame caused by the self-induced oscillation can be changed by a simple operation as necessary. Furthermore, the object to be heated can be uniformly heated with excellent heat transfer efficiency.

### Examples

Hereinafter, the oxygen-enriched burner and the method for heating using a burner according to the present invention will be described in more detail with reference to Examples, but the present invention is not limited to the following Example, and can be appropriately modified and implemented without changing the gist of the invention.

### <Burner Specifications and Operating Conditions>

In the Examples, as shown in FIGS. 1 to 3, a self-induced oscillation type oxygen-enriched burner 1, which includes the first communication pipe 71 and the second communication pipe 72 each having the first end 71a, 72a connected to a pair of the openings 62a, 62b, and three communication element 73a, 73b, 73c connected to the second ends 71b, 72b of the first communication pipe 71 and the second communication pipe 72 and communicating the first communication pipe 71 and the second communication pipe 72, was prepared. Using the prepared burner 1, a combustion test was performed under the following conditions.

In the Examples, the opening angle α of the center fluid ejection outlet 2 of the burner 1 shown in FIG.2 was adjusted to 30°.

In the Examples, propane gas was used as the fuel gas G1, and a gas having an oxygen enrichment rate of 40% was used as the oxygen-enriched air G2. The fuel gas G1 was flowed to the center fluid ejection outlet 2 and the oxygen-enriched air G2 was flowed to the peripheral fluid ejection outlet 3 to form a flame.

Burner operation conditions were as follows: the flow rate of the fuel gas G1 (propane gas) was 13 Nm³/h, the flow rate of the oxygen-enriched air G2 was 170 Nm³/h, and combustion was performed at an oxygen ratio of 1.05. Moreover, the oxygen ratio refers to the proportion of oxygen when the amount of oxygen necessary for complete combustion of the fuel gas was 1.

Further, in the Examples, the burner 1 was combusted in a test furnace (not shown), and the communication element 73 was switched during combustion, thereby changing the oscillation period t of the fuel gas G1 due to the self-induced oscillation in the center fluid ejection outlet 2. After reaching a steady state, measurement was performed for each evaluation items described in the following Examples.

In Example, the possibility of changing the oscillation period t by switching the communication element 73 described below was also evaluated. At this time, the equivalent diameter D of the fluid ejection flow path 6 was 10 mm, and the ejection velocity U of the fuel gas ejection G1 was adjusted to 40 m/s.

### <Examples 1 and 2>

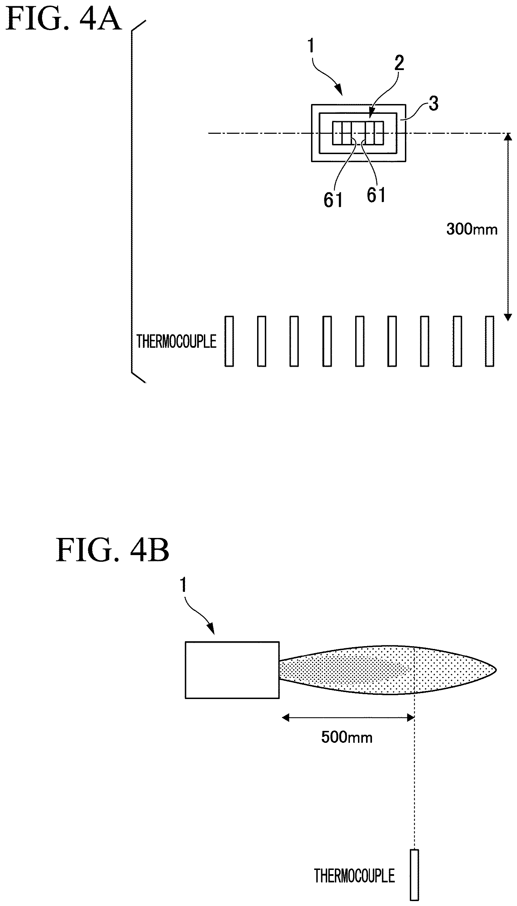

In Examples 1 and 2, the temperature distribution in the combustion furnace when the oxygen-enriched burner 1 was combusted by the self-induced oscillation and the communication period 73 was changed by switching the communication element 73 was evaluated using thermocouples. FIGS. 4A and 4B are schematic diagrams showing the positional relationship between the burner 1 and the thermocouples in the Examples 1 and 2.

In Examples 1 and 2, a plurality of the thermocouples were arranged along the expanding direction of the liquid election flow path 6 at positions 500 mm forward from the tip surface of the burner 1, as shown in FIG. 4B, and 300 mm below the center axis in the height direction of the burner 1 as shown in FIG. 4B.

In Examples 1 and 2, the evaluation was performed using the communication elements C1 and C2 having a communication element length len and 1/St (St: frequency) shown in Table 1 below.

As described above, the relationship between the length len of the communication element and 1/St is expressed by the equation {len = k · 1 / St (k: proportional constant)} and the equation {1 / St = D / (t · U) (t: oscillation period)}. Therefore, in the Examples 1 and 2, the diameter or the equivalent diameter D of the fluid ejection flow path 6 and the ejection velocity U of the center fluid were determined in advance, and the oscillation period t was changed by using communication elements having different communication element lengths len shown in Table 1 below.

**[Table 1]**

| | Communication Element | Length len of Communication Element (mm) | 1/St | Oscillation period t (sec.) |
|---|---|---|---|---|
| Example 1 | C1 | 800 | 400 | 0.1 |
| Example 2 | C2 | 4000 | 4000 | 1 |
| Example 3 | C3 | 20000 | 20000 | 5 |

In Examples 1 and 2, the temperature when the self-induced oscillation combust was generated and the steady state was reached was measured by each thermocouple in the test apparatus shown in FIGS. 4A and 4B.

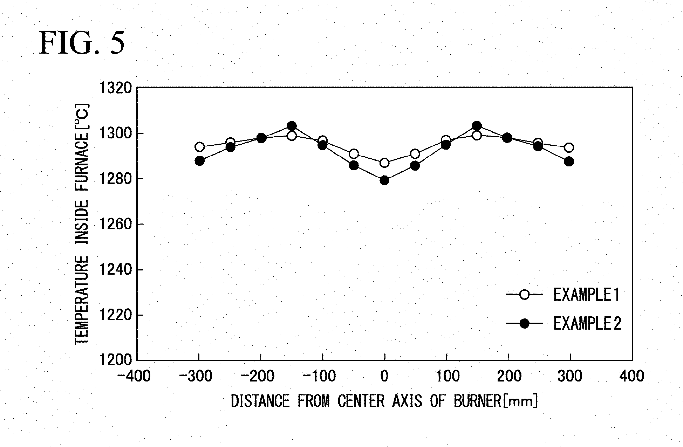

The distance from the center axis in the self-induced oscillation direction of the burner 1, that is, the gas ejection direction when the self-induced oscillation is not performed is the distance from the center axis of the burner is 0 [mm]. The relationship between the amplitude of the gas ejection direction during the self-induced oscillation and the furnace temperature, that is, the relationship between the position of the thermocouples and the furnace temperature is shown in the graph of FIG. 5 as data representing the temperature distribution in the furnace.

In the graph of FIG. 5, Example 1 is a measurement result in oscillation period t = 0.1 second (see Table 1), and Example 2 is a measurement result in oscillation period t = 1 second (see Table 1). As shown in FIG. 5, it can be understood that Example 1 with a short oscillation period t had a flat (uniform) temperature distribution compared to Example 2.

From the evaluation results in Examples 1 and 2, it is confirmed that the oscillation period t could be switched by changing the length of the communication element 73, and the temperature distribution could be changed by changing the oscillation period t, that is, the heating characteristics were changed.

It is clear that by using the oxygen-enriched burner according to the Examples, any combust state could be obtained by switching the communication element during the burner operation and changing the oscillation period t.

### <Examples 3 and 4>

In Examples 3 and 4, the change in the flame length in the oxygen-enriched burner that was combusted with the self-induced oscillation, and the change in the heat transfer characteristics associated therewith were evaluated.

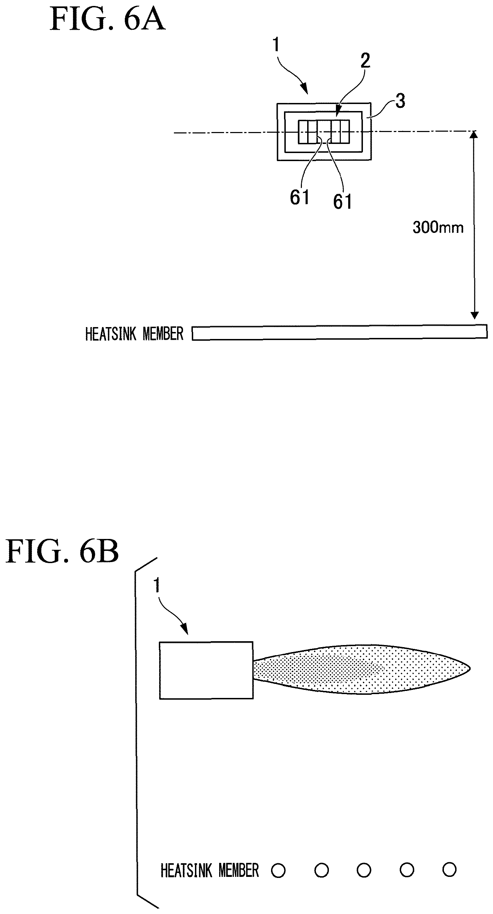

FIGS. 6A and 6B are schematic views showing the positional relationship between the burner 1 and the thermocouples in the Examples 3 and 4.

As shown in FIG. 6A, a plurality of heatsink members were arranged along the ejection direction of the combust gas from the center fluid ejection outlet 2, that is, the flame formation direction at positions 300 mm below the center axis in the height direction of the burner 1.

In the Examples 3 and 4, the self-induced oscillation combustion was generated in the test apparatus shown in FIGS. 6A and 6B, and the heat transfer efficiency to the heatsink members in a steady state was measured. At this time, the temperature of the heatsink members was confirmed by measuring the surface temperature using a thermocouple (not shown).

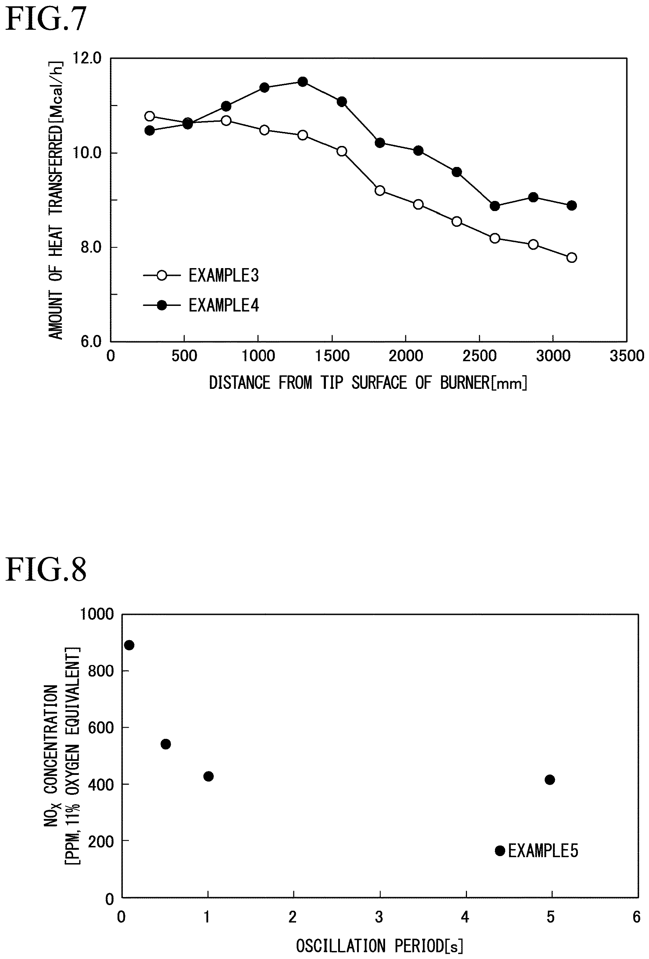

The relationship between the distance from the tip surface of the burner 1 to the heatsink member and the amount of heat transferred is shown in the graph of FIG. 7 as data representing the amount of heat transferred distribution in the furnace.

In the graph of FIG. 7, Example 3 is a measurement result in the same oscillation period t = 0.1 second (see Table 1) as Example 1, and Example 4 is a measurement result in the same oscillation period t = 1 second as in Example 2 (For the length len of the communication element, 1/St, and oscillation period t in Example 3, see communication element C3 in Table 1).

As shown in FIG. 7, it can be understood that the slow combustion was promoted in Example 4 having a longer oscillation period t than that in Example 3 than Example 3, the radiant heat transfer was enhanced, and the heat transfer efficiency was higher. In addition, it is revealed that the flame length was longer in Example 4, and a higher amount of heat transferred distribution was obtained even farther from the tip surface of the burner 1.

### <Example 5>

In Example 5, a combustion test with the self-induced oscillation using the burner 1 was performed under the same conditions as in Example 1, and NOx emission characteristics were evaluated except that the oscillation period t was changed at a plurality of periods (0.1 second, 0.5 second, 1 second, and 5 seconds) shown in the graph of FIG. 8.

The graph of FIG. 8 shows the relationship between the oscillation period t and the amount of NOx emission in the Example 5.

As shown in FIG. 8, in Example 5, it is confirmed that the NOx emission amount decreased as the oscillation period t increased. This is thought to be because the fuel gas and the oxygen-enriched air were slightly mixed with each other and became a slowly combust state, and the reduction region was formed, so that the amount of NOx emission was suppressed.

From the results of the Examples described above, it is clear that the oscillation period can be changed and controlled with a simple configuration and a simple operation in the oxygen-enriched burner according to the Examples. It is also clear that the combustion characteristics can be changed by a simple switching operation during the burner operation. Furthermore, it is also clear that the object to be heated can be uniformly heated with excellent heat transfer efficiency, and the amount of NOₓ emission can be effectively suppressed.

### Industrial Applicability

The oxygen-enriched burner and the method for heating using an oxygen-enriched burner according to the present invention are preferably used for preheating a tundish used for storing and transporting the molten iron or the molten steel in the steel producing or iron producing processes. Furthermore, the oxygen-enriched burner and the method for heating using an oxygen-enriched burner according to the present invention are very suitable for various applications in which object to be heated is heated using a burner.

### Explanation of reference numeral

- 1: burner
- 2: center fluid ejection outlet
- 3: peripheral fluid ejection outlet
- 6: fluid ejection flow path
6a introduction port
61 (a pair of) side walls
62a, 62b (a pair of) openings
63a one side wall
63b the other side wall
64 (rectangular tube-shaped) flow path
- 7: communication pipe
71 first communication pipe
72 second communication pipe
71a, 72a first ends of first and second communication pipes
71b, 72b second ends of first and second communication pipes
73, 73A, 73B, 73C communication element
74 on-off valve
- G1: fuel gas
- G2: oxygen-enriched air
- D: corresponding diameter of center fluid flow path

## Claims

1. An oxygen-enriched burner (1) which is configured to eject an oxygen-enriched air and a fuel gas from a plurality of fluid ejection outlets which are provided at a tip surface to burn them, and include a center fluid ejection outlet (2) and a peripheral fluid ejection outlet (3),
wherein
a pair of openings (62a, 62b) are provided at opposite positions on side walls 61 of a fluid ejection flow path of the center fluid ejection outlet (2), the pair of the openings (62a, 62b) are communicated with a communication portion (7),
an interval between a pair of the side walls (63a, 63b) downstream of the pair of the openings (62a, 62b) in the fluid ejection flow path is gradually expanded toward the downstream side,
the peripheral fluid ejection outlet (3) is provided around the center fluid ejection outlet (2),
the communication portion (7) includes a first communication pipe (71) and a second communication pipe (72) each having a first end (71a, 72a) connected to a the pair of the openings (62a, 62b), and at least one communication element (73, 73A, 73B, 73C) connected to a second end (71b, 72b) of the first communication pipe (71) and the second communication pipe (72)
and communicating the first communication pipe (71) and the second communication pipe (72), **characterized in that**
a plurality of communication elements (73, 73A, 73B, 73C) are provided in parallel between the first communication pipe (71) and the second communication pipe (72), and
at least one of an inner diameter and a length of the plurality of the communication elements (73, 73A, 73B, 73C) is different.

2. The oxygen-enriched burner (1) according to Claim 1, wherein the first communication pipe (71), the second communication pipe (72), and at least one communication element (73, 73A, 73B, 73C) are detachably connected.

3. The oxygen-enriched burner (1) according to Claim 1 or 2, wherein the communication portion (7) includes on-off valves (74) provided between the first communication pipe (71) and at least one communication element (73, 73A, 73B, 73C) and between the second communication pipe (72) and at least one communication element (73, 73A, 73B, 73C).

4. A method for heating using an oxygen-enriched burner (1), wherein an object to be heated is heated using the oxygen-enriched burner (1) according to any one of Claims 1 to 3 while causing the fluid ejected from the center fluid ejection outlet (2) to the self-induced oscillation in an expansion direction of the fluid ejection flow path.

5. The method according to Claim 4, wherein a period of the self-induced oscillation of the fluid ejected from the center fluid ejection outlet (2) is 30 seconds or less.

## Patentansprüche

1. Sauerstoffangereicherter Brenner (1), der konfiguriert ist, um sauerstoffangereicherte Luft und ein Brenngas aus einer Vielzahl von Fluidausstoßauslässen auszustoßen, die auf einer Spitzenoberfläche bereitgestellt sind, um sie zu verbrennen, und der einen mittleren Fluidausstoßauslass (2) und einen peripheren Fluidausstoßauslass (3) beinhaltet,
wobei
ein Paar von Öffnungen (62a, 62b) an gegenüberliegenden Positionen an den Seitenwänden 61 eines Fluidausstoßströmungswegs des mittleren Fluidausstoßauslasses (2) bereitgestellt sind,
das Paar der Öffnungen (62a, 62b) mit einem Verbindungsabschnitt (7) in Verbindung ist,
ein Intervall zwischen einem Paar der Seitenwände (63a, 63b) stromabwärts von dem Paar der Öffnungen (62a, 62b) in dem Fluidausstoßströmungsweg allmählich in Richtung der stromabwärtigen Seite erweitert wird,
der periphere Fluidausstoßauslass (3) um den mittleren Fluidausstoßauslass (2) bereitgestellt ist,
der Verbindungsabschnitt (7) ein erstes Verbindungsrohr (71) und ein zweites Verbindungsrohr (72) beinhaltet, die jeweils ein erstes Ende (71a, 72a), das mit einem Paar der Öffnungen (62a, 62b) verbunden ist, und mindestens ein Verbindungselement (73, 73A, 73B, 73C), das mit einem zweiten Ende (71b, 72b) des ersten Verbindungsrohrs (71) und des zweiten Verbindungsrohrs (72) verbunden ist und das erste Verbindungsrohr (71) und das zweite Verbindungsrohr (72) miteinander verbindet, aufweisen, **dadurch gekennzeichnet, dass**
eine Vielzahl von Verbindungselementen (73, 73A, 73B, 73C) parallel zwischen dem ersten Verbindungsrohr (71) und dem zweiten Verbindungsrohr (72) bereitgestellt ist, und
mindestens einer der Innendurchmesser und eine Länge der Vielzahl der Verbindungselemente (73, 73A, 73B, 73C) unterschiedlich ist.

2. Sauerstoffangereicherter Brenner (1) nach Anspruch 1, wobei das erste Verbindungsrohr (71), das zweite Verbindungsrohr (72) und mindestens ein Verbindungselement (73, 73A, 73B, 73C) lösbar verbunden sind.

3. Sauerstoffangereicherter Brenner (1) nach Anspruch 1 oder 2, wobei der Verbindungsabschnitt (7) Ein/Aus-Ventile (74) beinhaltet, die zwischen dem ersten Verbindungsrohr (71) und mindestens einem Verbindungselement (73, 73A, 73B, 73C) und zwischen dem zweiten Verbindungsrohr (72) und mindestens einem Verbindungselement (73, 73A, 73B, 73C) bereitgestellt sind.

4. Verfahren zum Erhitzen unter Verwendung eines sauerstoffangereicherten Brenners (1), wobei ein zu erhitzendes Objekt unter Verwendung des sauerstoffangereicherten Brenners (1) nach einem der Ansprüche 1 bis 3 erhitzt wird, während das aus dem mittleren Fluidausstoßauslass (2) ausgestoßene Fluid zu der selbstinduzierten Oszillation in einer Ausdehnungsrichtung des Fluidausstoßströmungswegs veranlasst wird.

5. Verfahren nach Anspruch 4,
wobei eine Periode der selbstinduzierten Oszillation des aus dem mittleren Fluidausstoßauslass (2) ausgestoßenen Fluids 30 Sekunden oder weniger ist.

## Revendications

1. Brûleur enrichi en oxygène (1) qui est configuré pour éjecter un air enrichi en oxygène et un gaz combustible d'une pluralité de sorties d'éjection de fluide qui sont prévues au niveau d'une surface de pointe pour les brûler, et incluent une sortie centrale d'éjection de fluide (2) et une sortie périphérique d'éjection de fluide (3),
dans lequel
une paire d'ouvertures (62a, 62b) sont prévues à des positions opposées sur les parois latérales 61 d'un trajet d'écoulement d'éjection de fluide de la sortie centrale d'éjection de fluide (2),
la paire d'ouvertures (62a, 62b) communiquent avec une partie de communication (7),
un intervalle entre une paire de parois latérales (63a, 63b) en aval de la paire d'ouvertures (62a, 62b) dans le trajet d'écoulement d'éjection de fluide s'étend progressivement vers le côté aval,
la sortie périphérique d'éjection de fluide (3) est prévue autour de la sortie centrale d'éjection de fluide (2),
la partie de communication (7) inclut une première conduite de communication (71) et une seconde conduite de communication (72) ayant chacune une première extrémité (71a, 72a) connectée à la paire d'ouvertures (62a, 62b), et au moins un élément de communication (73, 73A, 73B, 73C) connecté à une seconde extrémité (71b, 72b) de la première conduite de communication (71) et de la seconde conduite de communication (72) et mettant en communication la première conduite de communication (71) et la seconde conduite de communication (72),
**caractérisé en ce que**
une pluralité d'éléments de communication (73, 73A, 73B, 73C) sont prévus en parallèle entre la première conduite de communication (71) et la seconde conduite de communication (72), et
au moins l'un d'un diamètre intérieur et d'une longueur de la pluralité des éléments de communication (73, 73A, 73B, 73C) est différent.

2. Brûleur enrichi en oxygène (1) selon la revendication 1, dans lequel la première conduite de communication (71), la seconde conduite de communication (72) et au moins un élément de communication (73, 73A, 73B, 73C) sont connectés de manière amovible.

3. Brûleur enrichi en oxygène (1) selon la revendication 1 ou 2, dans lequel la partie de communication (7) inclut des vannes marche-arrêt (74) prévues entre la première conduite de communication (71) et au moins un élément de communication (73, 73A, 73B, 73C) et entre la seconde conduite de communication (72) et au moins un élément de communication (73, 73A, 73B, 73C).

4. Procédé de chauffage à l'aide d'un brûleur enrichi en oxygène (1), dans lequel un objet à chauffer est chauffé à l'aide du brûleur enrichi en oxygène (1) selon l'une quelconque des revendications 1 à 3 tout en provoquant l'éjection du fluide depuis la sortie centrale d'éjection de fluide (2) à l'oscillation auto-induite dans une direction d'expansion du trajet d'écoulement d'éjection de fluide.

5. Procédé selon la revendication 4,
dans lequel une période d'oscillation auto-induite du fluide éjecté depuis la sortie centrale d'éjection de fluide (2) est de 30 secondes ou moins.
